# DEMANDE DE BREVET EUROPEEN

(11) **EP 1 094 354 A1**
(43) Date de publication de la demande: **25.04.2001**
(21) Numéro de dépôt: 00402887.4
(22) Date de dépôt: 18.10.2000
(51) Int. Cl.: G02C 7/10, G02C 7/12

(54) **Verre composite de protection de la vue.**

(30) Priorité: 21.10.1999 FR 9913151
(71) Demandeur: Sporoptic Pouilloux S.A., 75008 Paris (FR)
(72) Inventeur: Hatchiguian, Joseph, 78100 Saint Germain en Laye (FR)
(74) Mandataire: Catherine, Alain

(57) **Abrégé**

Verre composite (2) de protection de la vue comportant en partant de l'intérieur, du coté de l'oeil (1), vers l'extérieur un premier verre (3) minéral poli optiquement; un film polarisant (4) présentant deux faces; un second verre (5) minéral poli optiquement; le film polarisant étant collé par sa première face sur le premier verre et par sa seconde face sur le second verre, caractérisé en ce que le premier verre d'une épaisseur d'environ 1 mm est un filtre passe haut dont la longueur d'onde de coupure est d'environ 480 nm et qui est de base jaune; le film polarisant est orienté pour atténuer les rayons lumineux réfléchis par le sol et renvoyés vers le haut; le second verre est incolore; et en ce que le premier verre comporte en surface du coté de l'oeil un dépôt de surface (7) absorbant la lumière formant une couche mince. Une bande miroitée médiane (9) dégradée peut être déposée sur la surface extérieure du verre composite.

## Description

La présente invention concerne un verre composite de protection de la vue. Elle a des applications dans le domaine de l'optique adaptée à la vision humaine ou animale.

Les verres de protection de la vue contre les effets nocifs des rayons solaires sont connus. Dans sa forme la plus simple, un verre est constitué d'une lamelle de verre généralement courbée selon deux directions perpendiculaires et d'épaisseur sensiblement constante dans le cas d'un verre non correcteur. Le matériau utilisé pour la réalisation de la lamelle peut être teinté dans la masse ou une couche absorbante et/ou réfléchissante peut être disposée en surface afin d'obtenir un effet de filtrage des rayons lumineux. Des perfectionnements divers sont également connus. Il est ainsi possible de disposer une couche d'un matériau antireflet en surface de la lamelle. De même, il est également possible d'associer un film polarisant au verre afin d'obtenir l'atténuation des rayons lumineux polarisés selon une certaine direction et en particulier suite à une réflexion par une surface, généralement le sol, recouvert de neige ou d'eau. Cependant, le film polarisant étant en matière plastique et étant relativement fragile, on le dispose collé en sandwich entre deux lamelles de verre.

Les structures résultantes sont donc formées de matériaux qui ont des caractéristiques spectrales de filtrage et d'apparence différente et l'effet global sur l'ensemble des rayons lumineux n'est pas toujours optimal. En particulier, il apparaît difficile d'obtenir une structure qui soit à la fois satisfaisante pour filtrer les rayons lumineux solaires du jour qui sont à large spectre et les sources de lumières artificielles de nuit qui sont très diverses. Les sources lumineuses que l'on peut trouver la nuit sont, dans la zone de sensibilité de l'oeil, généralement monochromatiques ou comportent peu de raies d'émissions. C'est en particulier le cas pour les sources lumineuses par décharge électrique dans un gaz qui sont utilisées pour l'éclairage public. Par ailleurs, l'éclairage automobile, à côté des sources à incandescence à spectre plus étalé, commence également à utiliser des lampes à décharge qui apparaissent plus agressives visuellement. Dans tous les cas, les sources lumineuses artificielles que l'on rencontre le plus fréquemment la nuit ont un spectre relativement éloigné du spectre solaire.

Le but de la présente invention est donc de proposer une structure de verre de protection qui soit optimisée à la fois pour les conditions diurnes et nocturnes d'utilisation. A cette fin, il est proposé un verre composite de protection de la vue comprenant en position d'utilisation, une partie supérieure en haut et une partie inférieure en bas et vers le sol, ledit verre composite comportant en partant de l'intérieur, du coté de l'oeil, vers l'extérieur:
- un premier verre minéral poli optiquement;
- un film polarisant présentant deux faces;
- un second verre minéral poli optiquement;
le film polarisant étant collé par de la colle par sa première face sur le premier verre et par sa seconde face sur le second verre.

Selon l'invention:
- le premier verre d'une épaisseur d'environ 1 mm est un filtre passe haut dont la longueur d'onde de coupure est d'environ 480 nm et qui est de base jaune;
- le film polarisant est orienté pour atténuer les rayons lumineux réfléchis par le sol et renvoyés vers le haut;
- le second verre est incolore;
et le premier verre comporte en surface du coté de l'oeil un dépôt de surface absorbant la lumière formant une couche mince.

Dans divers modes de mise en oeuvre de l'invention, les moyens suivants utilisés seuls ou selon toutes leurs combinaisons techniquement possibles sont mis en oeuvre:
- le dépôt de surface absorbant est un filtre passe haut;
- le dépôt de surface absorbant est un filtre passe tout atténuateur;
- le dépôt de surface absorbant est obtenu par évaporation sous vide poussé d'au moins un couple diélectrique-métal;
- le diélectrique est choisi parmi les oxydes tels que les oxydes de silicium ou de titane;
- le premier verre comporte en outre du coté de l'oeil en surface du dépôt de surface absorbant, une couche d'un matériau antireflet;
- la couche de matériau antireflet est obtenue par évaporation sous vide poussé d'un produit à faible indice de réfraction et non absorbant des rayons lumineux pour le spectre visible;
- l'épaisseur de la couche de matériau antireflet est adaptée aux longueurs d'ondes lumineuses parvenant à l'oeil;
- l'épaisseur de la couche est préférentiellement égale à environ 1/4 de la longueur d'onde moyenne des ondes lumineuses du spectre visible;
- le matériau antireflet est choisi parmi les monoxydes ou dioxydes de silicium, de fluor ou de fluorure de magnésium;
- le second verre comporte en outre sur sa surface extérieure une bande miroité dégradée vers la partie supérieure et vers la partie inférieure, le coefficient de réflexion de ladite bande étant minimal vers le haut et vers le bas et étant maximal entre les deux;
- la bande miroitée est obtenue par le dépôt sous vide poussé d'au moins une couche mince d'un métal;
- l'épaisseur de la couche mince est comprise entre 1 et 10 nm;
- le métal est choisi parmi les métaux à forte adhérence au verre et forte résistance chimique, mécanique et à forte dureté;
- le métal est choisi parmi: le chrome, l'argent, l'or, le chrome argenté, le chrome bleuté, le chrome or. Le chrome bleuté correspond à du chrome et à un antireflet dégradé de monooxyde de silicium.
- le vide poussé correspond approximativement à une pression d'environ 5 10⁻⁹ Bar.

La présente invention concerne également une paire de lunettes comportant au moins un verre composite selon l'une quelconque des caractéristiques isolées ou combinées précédentes.

L'utilisation d'un verre composite selon les caractéristiques précédentes permet d'éliminer les rayons nocifs solaires du type ultraviolet et infrarouge dans le cas de la vision diurne et améliore l'appréciation des contrastes sous toutes les conditions d'éclairage, diurne ou nocturne. Un tel verre améliore également le confort visuel lors de la conduite nocturne. Par temps de brouillard il accentue les reliefs et la profondeur de champ.

Le mode de réalisation dans lequel le verre comporte une bande miroitée médiane dégradée est particulièrement intéressant pour la conduite des engins à moteur du type véhicule automobile ou avion. En effet, la région la plus lumineuse du champ de vision correspond sensiblement à l'horizontale et les régions les moins lumineuses aux zones haute et basse comportant le tableau de bord ou les instruments de navigation. Le verre de l'invention permet donc d'atténuer et/ou de reflechir préférentiellement les rayons lumineux provenant de la zone la plus lumineuse.

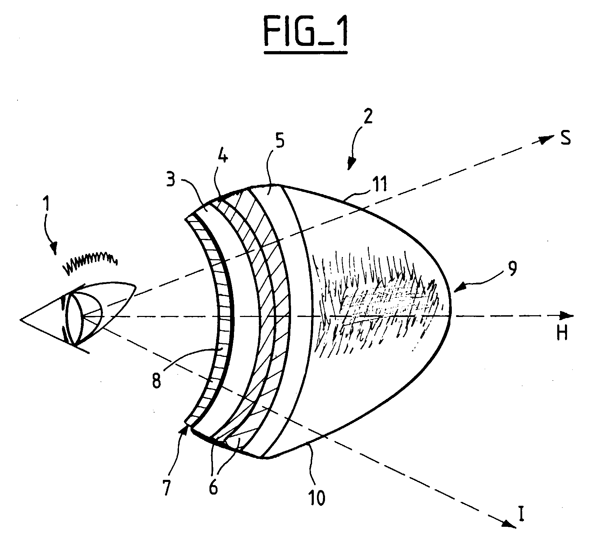

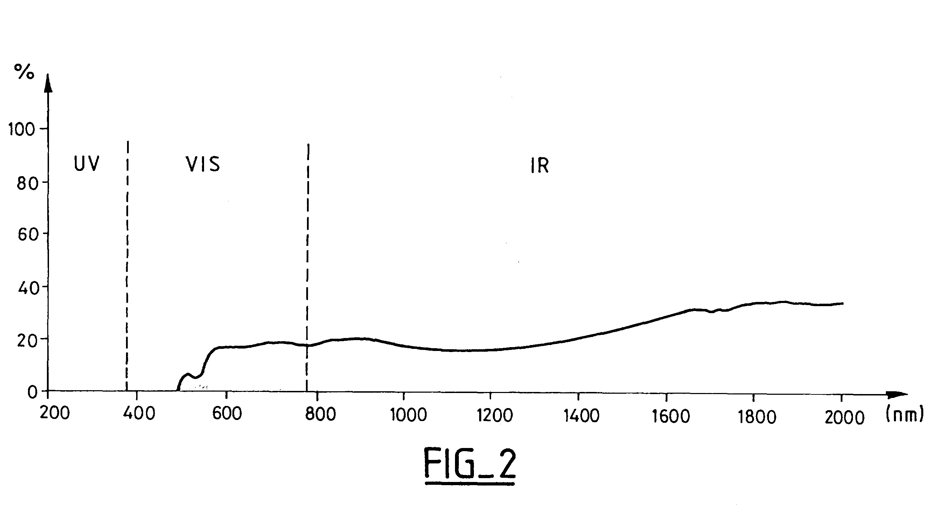

La présente invention sera mieux comprise à la lecture d'un exemple concret de réalisation non limitatif dans lequel la Figure 1 représente en coupe et en perspective un verre composite selon l'invention et la Figure 2 la courbe de réponse d'un verre composite selon l'invention.

Le verre composite 2 de la Figure 1 est concave vers un oeil 1. Le verre composite 2 est constitué d'un premier verre 3 vers l'oeil 1 et d'un deuxième verre 5 opposé au précédent par rapport à l'oeil 1. Entre le premier verre 3 et le deuxième verre 5 est disposé un film polarisant 4 en matière plastique. Le film 4 est collé par ses deux faces par de la colle 6 sur le premier verre 3 et sur le deuxième verre 5. Le verre composite comprend une zone supérieure 11 vers le haut, une zone inférieure 10 vers le bas et une zone médiane correspondant à la zone de réflexion maximale d'une bande miroitée 9 sensiblement horizontale. Le champ de vision de l'oeil 1 peut correspondre à trois zones: zone supérieure 11 pour l'axe S, zone médiane pour l'axe H et zone inférieure 10 pour l'axe I. Le film polarisant est orienté pour bloquer préférentiellement les rayons lumineux réfléchis par le sol ou l'eau et qui se propagent donc du bas vers le haut sensiblement parallèlement à l'axe 1.

Du côté de l'oeil 1, en surface du premier verre 3, a été réalisée un dépôt de surface absorbant 7 par déposition sous vide d'un couple diélectrique - métal en couche mince. On peut par exemple utiliser des oxydes de silicium ou de titane. D'autres oxydes métalliques peuvent également être utilisés dans le cadre de l'invention. La déposition se fait grâce à l'évaporation du couple ou du métal sous conditions oxydantes dans une enceinte close soumise à un vide poussé d'environ 5 10⁻⁹ Bar. Le dépôt de surface absorbant forme un filtre passe tout formant atténuateur ou, dans l'exemple de mise en oeuvre, un passe haut préférentiellement atténuateur dans la bande passante.

Une couche d'un matériau antireflet 8 est disposée en surface du dépôt de surface absorbant 7 du côté de l'oeil 1. La couche antireflet 8 est préférentiellement réalisée par déposition sous vide d'un produit à faible indice de réfraction. La déposition se fait suite à l'évaporation du produit dans une enceinte close soumise à un vide poussé d'environ 5 10⁻⁹ Bar.

Dans un mode particulier de mise en oeuvre de l'invention, une bande miroitée 9 est réalisée sur la surface extérieure du verre composite 2 du côté opposé à l'oeil 1. La bande miroitée 9 est dégradée de telle manière que la réflexion des rayons lumineux soit maximale dans une bande centrale sensiblement horizontale correspondant à un champ de vision horizontal selon l'axe H. Les zones au-dessus et au-dessous de la bande miroitée correspondant aux zones supérieure 11 et inférieure 10 présentent une réflexion de moins en moins importante au fur et à mesure de l'éloignement par rapport à ladite bande centrale. Un tel traitement est particulièrement intéressant dans les activités de pilotage ou de conduite et plus généralement, dans toutes celles où un paysage doit être observé suivant un plan horizontal et des instruments dans des plans inclinés vers le bas et/ou vers le haut par rapport à l'horizontale. C'est en particulier le cas pour la conduite des véhicules automobiles, le pilotage des avions ou tout autre type de moyen de transport contrôlé par un opérateur humain.

Le premier verre 3 est un verre teinté dans la masse dit verre jaune.

Le deuxième verre 5 est, par exemple, un verre incolore du type CROWN d'indice 1,523.

Le film polarisant 4 est un film plastique.

La colle 6 peut, par exemple, être choisie parmi les colles du type LOCITE® ou CYANOLIT® ou mélange des deux.

La combinaison des caractéristiques des premier et second verres, du film polarisant et du dépôt de surface permet ainsi la réalisation d'un verre composite qui présente donc des caractéristiques de protection et de confort visuel améliorés aussi bien de jour que de nuit pour éclairage artificiel.

La courbe de réponse d'un verre composite de l'invention au niveau de la bande centrale est donnée sur la Figure 2 où les % correspondent à la transmission, nm à la longueur d'onde de la lumière et UV, VIS et IR correspondent respectivement aux bandes ultra-violet, visible et infrarouge.

## Revendications

1. Verre composite (2) de protection de la vue comprenant en position d'utilisation, une partie supérieure (11) en haut et une partie inférieure (10) en bas et vers le sol, ledit verre composite comportant en partant de l'intérieur, du coté de l'oeil (1), vers l'extérieur:
- un premier verre (3) minéral poli optiquement;
- un film polarisant (4) présentant deux faces;
- un second verre (5) minéral poli optiquement;
le film polarisant étant collé par de la colle (6) par sa première face sur le premier verre et par sa seconde face sur le second verre, caractérisé en ce que:
- le premier verre d'une épaisseur d'environ 1 mm est un filtre passe haut dont la longueur d'onde de coupure est d'environ 480 nm et qui est de base jaune;
- le film polarisant est orienté pour atténuer les rayons lumineux réfléchis par le sol et renvoyés vers le haut;
- le second verre est incolore;
et en ce que le premier verre comporte en surface du coté de l'oeil un dépôt de surface (7) absorbant la lumière formant une couche mince.

2. Verre selon la revendication 1 caractérisé en ce que le dépôt de surface absorbant est un filtre passe haut.

3. Verre selon la revendication 2 caractérisé en ce que le dépôt de surface absorbant est obtenu par évaporation sous vide poussé d'au moins un couple diélectrique-métal, le diélectrique étant choisi parmi les oxydes tels que les oxydes de silicium ou de titane.

4. Verre selon l'une quelconque des revendications précédentes caractérisé en ce que le premier verre comporte en outre du coté de l'oeil en surface du dépôt de surface absorbant, une couche d'un matériau antireflet (8).

5. Verre selon la revendication 4 caractérisé en ce que la couche de matériau antireflet est obtenue par évaporation sous vide poussé d'un produit à faible indice de réfraction et non absorbant des rayons lumineux pour le spectre visible, le matériau antireflet étant choisi parmi les monoxydes ou dioxydes de silicium, de fluor ou de fluorure de magnesium.

6. Verre selon la revendication 5 caractérisé en ce que l'épaisseur de la couche de matériau antireflet est adaptée aux longueurs d'ondes lumineuses parvenant à l'oeil et est préférentiellement égale à environ 1/4 de la longueur d'onde moyenne des ondes lumineuses du spectre visible.

7. Verre selon l'une quelconque des revendications précédentes caractérisé en ce que le second verre comporte en outre sur sa surface extérieure une bande miroité (9) dégradée vers la partie supérieure et vers la partie inférieure, le coefficient de réflexion de ladite bande étant minimal vers le haut et vers le bas et étant maximal entre les deux.

8. Verre selon la revendication 7 caractérisé en ce que la bande miroitée est obtenue par le dépôt sous vide poussé d'au moins une couche mince d'un métal, l'épaisseur de la couche mince étant comprise entre 1 et 10 nm.

9. Verre selon la revendication 8 caractérisé en ce que le métal est choisi parmi le métaux à forte adhérence au verre et forte résistance chimique, mécanique et de forte dureté, le métal étant choisi parmi le chrome, l'or, l'argent, le chrome argenté, le chrome bleuté, le chrome or.

10. Paire de lunettes comportant au moins un verre composite selon l'une quelconque des revendications précédentes.
